# EUROPEAN PATENT SPECIFICATION

(11) **EP 1 607 726 B1**
(45) Date of publication and mention of the grant of the patent: **14.10.2009**
(21) Application number: 04396039.2
(22) Date of filing: 18.06.2004
(51) Int. Cl.: G01G 19/04, G01M 17/10, B61K 9/12

(54) **Method and arrangement for measuring characteristics of a vehicle travelling on a rail**
Verfahren und Vorrichtung zum Messen von Merkmalen eines sich auf Schienen bewegendes Fahrzeuges
Méthode et dispositif pour mesurer des caractéristiques d'un véhicule se déplaçant sur des rails

(43) Date of publication of application: 21.12.2005
(73) Proprietor: Tamtron Systems Oy, 02160 Espoo (FI)
(72) Inventor: Salvolainen, Reijo, 02700 Kauniainen (FI)
(74) Representative: Kupiainen, Juhani Kalervo

(56) References cited:
- WO-A-87/06203
- WO-A-91/11355
- DE-A- 4 439 342
- US-A- 4 701 866

## Description

### TECHNICAL FIELD OF THE INVENTION

The present invention relates to a method, arrangement, data processing unit and computer program product for measuring characteristics of an object travelling on a rail, in particularly characteristics of an axle, bogie or wagon of a vehicle, and especially a wheel such as flat wheel, wheel out of roundness or circularity of a wheel, and weight of a wheel, when the wheel is passing a measuring zone.

### BACKGROUND OF THE INVENTION

Detection of characteristics or conditions of wheels of a vehicle travelling on a rail is very important in order to discover broken wheels, such as flat wheel, wheel out of roundness or circularity of a wheel, because broken wheel may further cause damages for example to the rail and rail structure, as well as to the vehicle and additional damages to the wheel itself, and also cause excessive vibration in the vehicle when rolling along the track. Furthermore a broken wheel may be a safety risk. Detection of weight of a wheel is also significant when assessing loadings of a vehicle or distribution of load between wheels of an axle, and effects of the wheel to the rail, and rail structures comprising sleepers and ballast stone bedding.

Identification of the broken and also the corresponding wagon and axle is also important in order that right parties can be warned about the broken wheel immediately in real time and thus also the broken wheel can be repaired or removed when a vehicle with the broken wheel arrives at a station. Also monitoring of evolution of defect of a wheel may be important in a certain situation, for example when the wheel or springing of the wheel is only slightly damaged and the condition of the wheel is predicted to deteriorate in use.

Different kind of solutions for detecting characters of wheels and vehicles travelling on the rail is known from prior art, where most of them base on the use of vibration or acceleration sensors. For example PCT patent application WO 87/06203 describes an apparatus for track-based detection of damages in railway wheels on passing carriage, where a measuring stretch consisting a section of the ordinary track is equipped with a number of motion sensitive transducers measuring the rail's movement or acceleration in vertical direction when a carriage passes.

According to the solution of WO 87/06203 the transducers are read when the wheel travels on the rail in such a manner that each transducer reads a section of the wheel circumference but the signals are combined in such a manner that the entire wheel circumference is read and the read signals are processed or stored for later data processing.

DE4439342 discloses a circuit for determining non-round wheels of rail track vehicles wherein a number of sensors are provided both in longitudinal and transversal directions relative to a predetermined rail section.

US4701866 discloses an apparatus for measuring loads transmitted via wheels to a track. Means responsive to the load are located at a plurality of equally spaced locations on a portion of the track.

There are however some problems with prior art solutions. In prior art solutions force effects of adjacent wheels easily disturb measuring of a particular wheel, because force effects of adjacent wheels distribute along the rail very far due to the elastic ballast stone bedding below the rail, for example. Moreover the statistical reliability of assessing of condition of a wheel is not good, because typically only one round of the rolling wheel is measured at maximum. This is because otherwise, if a measurement area will be longer, at least one adjacent wheel, such as a wheel in same bogie, would enter to the measurement area as early as the wheel to be assessed still travels in the measurement area, whereupon the adjacent wheel would disturb measuring of the wheel to be assessed. Furthermore an elastic ballast stone bedding below the rail causes remarkable distortion into measurements by allowing bending of a rail below the wheel travelling on it, for example, and thus inducing additional shearing stress and making reliable and accurate measurement more complicate or even impossible. Especially prior art solutions are fixed for a certain purpose, such as to measure only a wheel or bogie, whereupon the solution for a wheel, for example, can't be used for measuring a bogie or a wagon.

### SUMMARY OF THE INVENTION

It is an object of the invention to provide a method, arrangement, data processing unit and computer program product for measuring characteristics of an object travelling on a rail so that distortions in measuring caused by an elastic base, such as a ballast stone bedding, below the rail can be avoided. Moreover an object of the invention is to reliably measure characteristics of a single wheel travelling on a rail so that the distortions in measuring caused by an elastic base below the rail, and/or effects of adjacent wheels can be avoided. Furthermore an object of the invention is to provide a method, arrangement, data processing unit and computer program product for measuring characteristics of a wheel, axle, bogie, and a wagon with a same device and at same time, if needed, when an object bypasses a measuring point. A further object of the invention is also to collect enough data in order to reliably assess condition of a single wheel, axle, bogie or wagon.

The objects of the invention are achieved with the features of claims 1, 13, 14 and 15. Further advantageous features of the invention are described in dependent claims.

The following notions are used in this application:
Measurement range / sub-range: measurement range is achieved advantageously programmatically by processing measurement data of sensors, whereupon the measurement range can be considered as a virtual measurement zone or a virtual scale. Measurement range can be composed from at least one measurement sub-range after the measurement event, when a wheel, axle, bogie and/or wagon has/have already passed an appropriate measurement zone (sub-zone), or alternatively in real time, when the wheel is just passing the measurement zone (sub-zone). Length of the measurement range may vary from covering a whole measurement zone comprising all sensors to a measurement sub-zone formed by a few sensors. The term sub-range means a shortest appropriate measurement zone (for a chosen object, such as wheel, bogie or wagon) composed of minimum quantity of sensors, such as one sleeper sensor and two rail sensors.

Length of the measurement range bases on a measurement situation, such as is the purpose to measure only one wheel, axle or bogie alone, or whole wagon. If, for example, a wheel is measured, typically a measurement sub-range covering a measuring sub-zone of three sleepers is used (approximately 60 centimeters), whereupon the measurement sub-zone comprises three sleeper sensors and two rail sensors. When the wagon travels along the rail, the measurement sub-range is also shifted along the travelling wagon so, that next measurement sub-range covers a measuring sub-zone of next three sleepers, for example. It is also possible, that the next measurement sub-range covers a measuring sub-zone of three sleepers, where one (or two) sleeper is still same sleeper than with earlier measurement sub-range, and only one (or two) sleeper is new, for example, whereupon the measurement sub-ranges are overlapped. Again, if a bogie is measured, a measurement sub-range covering a measuring sub-zone of five sleepers is used, for example, whereupon the measurement sub-zone comprises five sleeper sensors and two rail sensors, but still overlapped measurement sub-ranges can be composed.

Measurement zone / sub-zone: a group of sensor arranged to measure shearing stresses in a rail and force effects caused by an object travelling on the rail forms a measurement zone. Each sensor detects forces and shearing stresses in a certain sensitive range extending from the sensor, and sub-zone is formed, when a group of few sensors is elected to measure forces and shearing stresses in the rail. The length of the measurement zone bases on a measurement situation, such as is the purpose to measure only one wheel, axle or bogie alone, or whole wagon. If, for example, a wheel is measured, a shortest usable measurement sub-zone comprises typically three sleepers (three sleeper sensors and two rail sensors). If a bogie is measured, a shortest usable measurement sub-zone comprises five sleepers, for example. For more reliable results a measurement zone comprising plurality of separate measurement sub-zones is used. The measurement sub-zones are advantageously separate and adjacent measurement sub-zones, but they can also be overlapped.

Measurement field: sensors arranged to the rail and sleepers meant to use for measuring purpose in any situation in the present invention form a measurement field. Measurement field typically covers the length of 7 to 10 sleepers, but it is obvious according to the invention that the length of the measurement field can be varied by adding or removing sensors.

Sensor is a means for measuring shearing stresses and forces induced on a rail, when a wheel, axle, bogie and/or wagon travels on it. The sensor may comprise a stretch slip, pressure and temperature sensing means, memory unit, A/D-converter, means for transmitting and receiving data. Furthermore the sensor may also comprise ID information so the sensor can be identified. Advantageously the sensor used in the present invention comprises a bonded electrical resistance strain gauge. Moreover, according to an embodiment of the invention the sensor locating at the point of a sleeper (sleeper sensor) is adapted into a rail fastening unit, whereupon the sensor can be removed very easy and fast, if it get broken. The sleeper sensor is advantageously a type of a double ended shear beam sensor, and is adapted to sense at least vertical forces. Further the sensor attached in the rail (rail sensor) between the sleepers is typically a type of a press fit sensor, which is adapted to sense at least horizontal forces. The rail sensor is typically attached to the rail so, that first a hole is drilled into the rail, whereafter the press fit type sensor is fitted into the hole.

According to a first embodiment of the invention a measurement zone is arranged, where the measurement zone comprises at least two measurement sub-zones and typically plurality of sensors adapted both between the sleepers and at the point of rail fastening units or sleepers. The length of the measurement zone can be varied based on the measuring situation. The used measurement zone for measuring a wheel is advantageously at least as long as a circumference of the wheel to be measured, and longer, when a bogie or a whole wagon is measured, respectively. Now it should be noticed that the length of the measurement sub-zone can be, and typically is, shorter than the length of the measurement zone. Furthermore it is characteristics for the present invention that the length of the measurement sub-range and also range is varied programmatically. With a long measurement range statistically reliable results can be achieved, and with an appropriate long measurement sub-range for a wheel, for example, also effects of adjacent wheels can be eliminated more reliably. In addition, when using a long measurement range (consisting of plurality of measurement sub-ranges), a determined disturbing factor of a wheel, for example, is repeated and thus more reliable result can be achieved.

According to a second embodiment of the invention a single wheel of a vehicle is monitored continuously, when a wheel travels along the rail over a measurement zone. In the measurement arrangement according to the invention each sensor is coupled with a data processing unit via own communication channel, where the data processing unit is adapted to collect data from each sensor via its own channel and store collected data to a memory means. Advantageous sampling rate of the sensors is typically 5000 samples in a second for each channel, which allows the wheel to travel along the rail at the speed of 250 km/h, and still the measuring results will be reliable. It should be noted that each channel is read at the same time and 5000 times in a second. It is however clear to a skilled person, that the sampling rate can be changed, whereupon the wheel moving faster that 250 km/h can also be measured reliably.

The continuous monitoring means in the invention that a single wheel (or other object, such as an axle, bogie, or wagon) is monitored in a first measurement sub-zone, when the wheel travels along the rail on said measurement sub-zone, and when the wheel then will leave the first measurement sub-zone and enter to the second measurement sub-zone adjacent to the first one, also the used measurement sub-zone is changed from first one to the second measurement sub-zone, and so on. Advantageously each channel (each channel of the measurement field, not only channels of measurement sub-zone) is started to read to a memory means when the object (wheel) enters to the measurement field and stopped when the object (wheel) leaves the measurement field. After the object (wheel) has leaved the measurement field, the measurement typically takes place and appropriate measurement sub-ranges and measurement range are composed programmatically using data from appropriate sensors read at appropriate time in a view of a travelling object to be monitored.

According to a third embodiment of the invention the data processing unit is adapted to process collected data in order to construct measuring sub-range of an appropriate length for a wheel, axle, bogie and wagon, for example, and also advantageously to compose measuring range from the sub-ranges, where the length of the measuring range is as long as possible. In this way reliable measurement results can be achieved for a wheel, axle, bogie or even a whole wagon. The length of a measurement sub-range for a one wheel corresponds a measurement sub-zone comprising typically three sensors, two of which are rail sensors and one sleeper sensor. The length of the measurement range can be changed programmatically for example in real time when the wheel travels on the measurement field or alternatively later when data has already been stored.

According to a fourth embodiment of the invention the data processing unit is also adapted to analyse the collected data in such a way, that a type of a vehicle and/or wagon, numbers of wagons, bogies and wheels, as well as total weight of vehicle, weigh of a wagon, bogie and/or wheel can be determined. Moreover the data processing unit is also adapted to analyse collected data in such a way, that possible broken wheels, such as flat wheel and/or wheel out of roundness, as well as other defects in a structure of the wheel, springing or wagon can be detected.

According to a fifth embodiment of the invention the data processing unit is also adapted to construct a display of a user interface means and updating it and also alert when detecting a broken wheel or other anomalous. The data processing unit is advantageously adapted to compare collected data to the data of unbroken wheel and to data measured when a wagon of a certain type travels on the rail, for example, in order to detect anomalous in collected data and to alert. Moreover according to the embodiment of the invention the data processing unit is adapted to visually illustrate measuring results, such as the type and number of wagons, and bogies and/or wheels with defects.

According to a sixth embodiment of the invention the data processing unit is also adapted to construct and display a processed curve of forces induced by a single wheel (or axle, bogie and/or wagon) in a measurement zone with desired length. Advantageously a user can choose a wheel, for which the curve is constructed and displayed, as well as the length of measurement zone or range or even measurement sub-zone or sub-range. According to an advantageous embodiment the data processing unit is also adapted to choose a wheel with anomalous feature automatically and construct and display its processed curve in a manner that the anomalous feature can be clearly detected visually. Anomalies can be discovered by comparing measured data of a wheel to measured data of a healthy wheel of same kind, for example, or by comparing measured data to a certain acceptable fluctuation range.

According to the present invention numerous advantage features can be achieved. For example, interference of adjacent wheels in the measurement process can be avoided with rail sensors arranged both between the sleepers on the rail and at the point of rail fastening units or sleepers, because forces caused by the wheel are distributed both to the rail and the sleeper below the wheel, but also along the rail to the adjacent sleepers. Detection of force distribution caused the wheel to be assessed and the adjacent wheels with only sensors locating at the point of the sleeper is very difficult or even impossible to control. According to the present invention this can be controlled by press fit sensors (rail sensors) arranged into the rail between the sleepers. For example, when a wheel is monitored, three sleeper sensors and two rail sensors are used, where sleeper sensors detect mainly vertical forces and rail sensors detects mainly horizontal forces. Now interference forces of the adjacent wheel distributing along the rail can be defeated or even determined with the rail sensors, such as also horizontal forces of the wheel to be monitored, and thus compose reliable general view of force distributions.

Furthermore, in order to collect enough data to enable reliably assessment of condition of a single wheel and also enable statistically reliable measurements, the measurement zone and range should be quite long in relation to the circumference of the wheel. With prior art solution the measurement zone being longer than the circumference of the typical wheel travelling on the rail induces a problem, namely that at least one of the adjacent wheel, such as a wheel in same bogie, will travel in the measurement zone simultaneously with the wheel to be assessed and thus disturbing measuring of the wheel to be assessed. However, according to the present invention a measurement zone being longer than the circumference of the wheel can be applied, because interference of adjacent wheels in the measurement can be avoided, as discussed above, and thus also the statistical reliability of the measurements can be improved. In addition in typical prior art solution special sleepers must be used, because sensors are fixed to the sleepers. Also this defect can be avoided with the present invention, because sleeper sensors according to the invention are advantageously arranged to the rail fasters and rail sensors direct to the rail, whereupon both wooden sleepers and cement sleepers can be utilised. In addition according to the present invention a wheel, axle, bogie, and/or wagon can be monitored and analysed with a same measurement arrangement, because a measurement sub-ranges and measurement ranges of different length can be composed (even on the fly), and therefore save lot of costs because there is no need to develop a separate measuring arrangement for different objects, such as wheels, axles, bogies and wagons.

### BRIEF DESCRIPTION OF THE DRAWINGS

Next the invention will be described in greater detail with reference to exemplary embodiments in accordance with the accompanying drawings, in which
- Figure 1: illustrates an exemplary arrangement for measuring characteristics of a vehicle and a wheel of the vehicle travelling on a rail according to an advantageous embodiment of the present invention,
- Figure 2: illustrates typical wheel load distribution in a rail and sleepers,
- Figure 3: illustrates a continuous rail-wheel-contact-force analysis idea according to an advantageous embodiment of the present invention,
- Figure 4: illustrates an exemplary graph of a measurement of an example axle according to an embodiment of the present invention,
- Figure 5: illustrates an exemplary user interface according to an advantageous embodiment of the present invention, and
- Figure 6: illustrates an exemplary user interface and an exemplary graph of continuous force effect of a single wheel travelling on a rail in the measurement zone according to an advantageous embodiment of the present invention.

### DETAILED DESCRIPTION

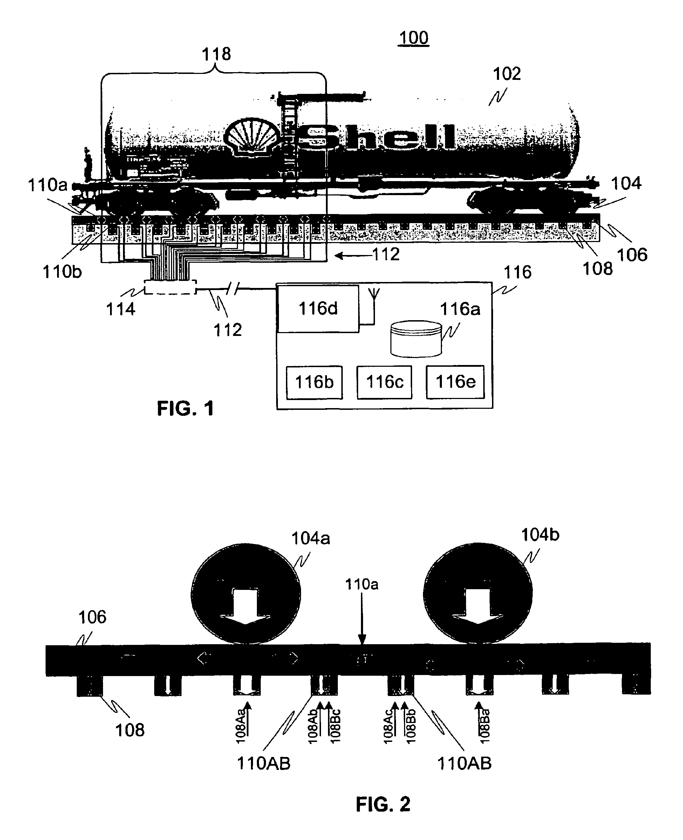

Figure 1 illustrates an exemplary measuring arrangement 100 to measure characteristics of a vehicle 102 and a wheel 104 of the vehicle 102 travelling on a rail 106 according to an advantageous embodiment of the present invention. The measuring arrangement 100 advantageously comprises plurality of sensors 110, where some sensors 110a are arranged into the rail 106 between the sleepers 108 and some sensors 110b are arranged at the point of sleepers 108, advantageously integrated to a rail fastening units. A group of the sensors 110 forms a measurement field 118. Typical measurement field according to the invention extends over 7 to 10 sleepers 108. The sleepers are advantageously standard wooden or concrete sleeper.

In arrangement 100 each sensor 110 is coupled with a data processing unit 116 via own communication channel 112, where the data processing unit 116 is adapted to collect data from each sensor via its own channel and store collected data to a memory means 116a. In an embodiment of the invention there is an optional data collector between the sensors 110 and data processing unit 116, with which the sensors are coupled via own communication channel 112. The data collector collects measurement data from each sensor 110 and advantageously transmits it in a centralised manner to the data processing unit 116 via a communication 112.

It should be noted, that the data collector 114 is an optional and each sensor can be in communication direct with data processing unit 116. Moreover, the communication between sensors and data processing unit and/or data collector, as well as the communication between the data collector and data processing unit can be implemented by a cable (like USB) or wireless way, such as optically or with radio waves, for example.

According to the invention the data processing unit 116 further comprises a measurement sub-range and measurement range construction means 116b adapted to construct optimal measurement sub-range for a wheel, bogie and/or wagon to be measured and to construct a measurement range from measuring sub-ranges, and a result composing means 116c for composing measurement results with help of constructed measuring range.

The result composing means 116c is advantageously adapted to analyse data collected from sensors in such a way, that a type of a vehicle and/or wagon 102, numbers of wagons, bogies and wheels 104, as well as total weight of the whole vehicle, weigh of a wagon, bogie and/or wheel, and also possible broken wheels, such as flat wheel and/or wheel out of roundness, as well as other defects in a structure of the wheel, springing or wagon are determined. The result composing means 116c is advantageously adapted to compare collected data to data of unbroken wheel and to data measured when a wagon of a certain type travels on the rail, for example, in order to compose results, detect anomalous in collected data and to alert.

Moreover, according to an advantageous embodiment of the invention the data processing unit 116 may further comprise at least one of the following means, such as a communicating means 116d adapted to transmit/receive information from/to the sensors 110 and/or data collector 114. Further the communicating means 116d is advantageously adapted to inform a user, such as an administrator, driver or other party of the results composed by the means 116c.

In addition according to an embodiment of the invention the data processing unit 116 comprises a computer program product 116e for measuring characteristics of an object travelling on a rail, where the computer program product, when run on a computer, is adapted to read data from the sensors and to construct at least two virtual measurement sub-ranges in such a way that the first virtual measurement sub-range corresponds a first part of the measurement zone and the second measurement sub-range corresponds a second part of the measurement zone next the first one, and further adapted to construct the first virtual measurement sub-range from data of sensors forming the first part of the measurement zone, where data is read when the object travels along the rail in the first part of the measurement zone and to construct the second virtual measurement sub-range from data of sensors forming the second part of the measurement zone, where data is read when the object travels along the rail in the second part of the measurement zone, and furthermore adapted to construct a virtual measurement range to illustrate force effects of the object travelling on the rail at least in the part of the measurement zone by combining at least the first and second virtual measurement sub-ranges.

According to a further embodiment of the invention the data processing unit 116 is also adapted to construct a display of a user interface means and updating it and also alert when detecting a broken wheel or other anomalous. Moreover the data processing unit can be adapted to visually illustrate measuring results, such as the type and number of wagons, and bogies and/or wheels with defects, as well as also to construct and display a processed curve of forces induced by a single wheel in a measurement zone with desired length. These are, however, optional features of the data processing unit, and can be implemented also by other means.

Figure 2 illustrates typical wheel load distribution in a rail 106 and sleepers 108, where it can be clearly seen that force effects of the wheel 104 distribute very far in the rail. Thus it is also desirable that forces distributing along the rail 106 can be measured in order to achieve reliable measuring results and interference of the adjacent wheel can be either defeated or determined.

Wheel load distributes along the rail 106 in horizontal direction and over neighbouring sleepers 108. For example, approximately 50% of the wheel load of the first wheel 104a is directed to the sleeper 108Aa locating just below the wheel 104a, but approximately other 50% of the wheel load of the first wheel 104a is distributed along the rail 106 in horizontal direction (left and right) and further to the adjacent sleepers 108Ab and 108Ac. In similar way the wheel load of the second wheel 104b is directed to the sleeper 108Ba locating just below the wheel 104b, and other 50% of the wheel load of the second wheel 104b is distributed along the rail 106 and further to the adjacent sleepers 108Bb and 108Bc, where the adjacent sleepers 108Bb and 108Bc are same as sleepers 108Ac and 108Ab.

Now, when monitoring for example characters of the wheel 104a, three sleeper sensors 110b are typically chosen to be used, one just below the wheel 104a and two sleeper sensors in the adjacent sleepers, and further two rail sensors 110a, one of which advantageously locates between the sleepers 108AB, whereupon residual forces distributing along the rail in horizontal directions can be defeated or determined.

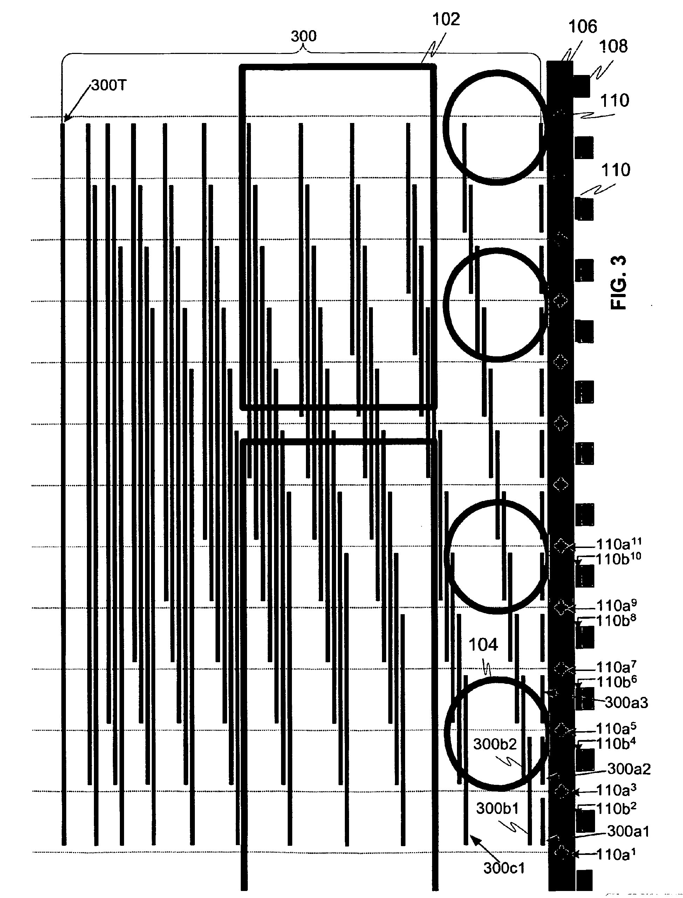

Figure 3 illustrates an idea of continuous rail-wheel-contact-force analysis and also idea of constructing measurement ranges 300 with different length from measurement sub-ranges according to an advantageous embodiment of the present invention.

According to the present invention a virtual measurement sub-range 300a1 is constructed from data measured by sleeper sensor 110b², and adjacent rail sensors 110a¹, and 110a³, and an adjacent measurement sub-range 300a2 is constructed from data measured by sleeper sensor 110b⁴, and adjacent rail sensors 110a³, and 110a⁵. Now the longer measurement range 300b1 can be achieved either by combining two measurement sub-ranges 300a1 and 300a2 or by constructing from data measured by sleeper sensors 110b² and 110b⁴, and rail sensors 110a¹, and 110a⁵. With the same inventive analogue measurement range 300c1 is either combined from measurement sub-ranges 300a1, 300a2 and 300a3, or constructed from data measured by sleeper sensors 110b², 110b⁴, and 110b⁶, and rail sensors 110a¹, and 110a⁷.

Now, if a wheel 104, for example, is monitored, when a wagon 102 travels along the rail 106, the measurement sub-range 300c1 is also "shifted" along the travelling wagon 102 or wheel 104 so, that next measurement sub-range 300c2 covers a measuring sub-zone of next three sleepers, and etc. The change of the measurement sub-range is advantageously done, when the wheel 104 has travelled distance of one sleeper (approximately 60 cm). By changing again to the next measurement sub-range and repeating this through all sensors and the measurement field, when the wheel travels, a reliable measurement for said wheel can be achieved. The same can be done also for a bogie, but now the measurement sub-range and also sub-zone is typically clearly longer than for a wheel. If the wheel or bogie is followed with the virtual scale or measurement sub-ranges through the whole measurement field, a longest possible measurement range 300T can be composed from sub-ranges, such as 300a1, 300a2, 300a3, or 300b1, 300b2, or 300c1, 300c2, 300c3, whereupon statistical reliability is very high.

The measurement ranges 300 are advantageously constructed programmatically, such as by combining shearing stresses measured by appropriate sensors. Thus the present invention enables to monitor a single wheel, axle, bogie or even a whole wagon. Moreover, because a measurement sub-range constructed for a wheel, for example, is shifted along the moving wheel at the same speed, a long measurement range can be achieved.

The measurement range and sub-range 300, 300a, 300b, 300c, 300T of various length can be constructed programmatically for example in real time when the wheel 104 travels on the measurement zone. Alternatively the measurement range and sub-range of desired length can also be constructed later when data has already been stored in the memory means 116a of the data processing unit 116.

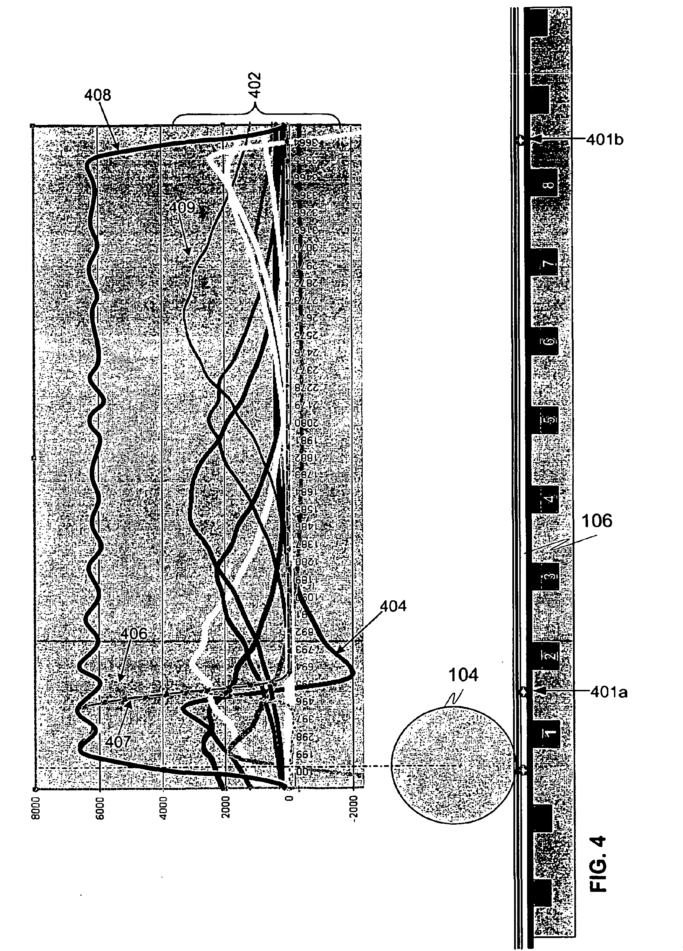

Figure 4 illustrates an exemplary graph 400 of a measurement of an exemplary wheel according to an embodiment of the present invention, where curves 402 illustrate forces measured with different sensors in function of distance of a moving wheel.

The curve 408 illustrates force effects of a single wheel at the length of the measurement zone of sleepers 1-8, where the curve 408 can be achieved with measurement sub-ranges shifted along the moving wheel, for example. The curve 407 illustrates detected forces in a measurement sub-range of one sleeper (approximately 40 cm), and the curve 406 illustrates forces in a measurement range between the rail sensor 401 a and 401 b. The curves 409 illustrate forces measured by different sleeper sensors and the curve 404 illustrates forces induced by the wheel 104 and measured by the rail sensor 401 a, when the wheel 104 travels along the rail 106 and bypasses the rail sensor 401 a. It should be noticed that when the wheel 104 approaches the rail sensor 401 a, the rail sensor 401 a detects horizontal force, which sign is positive, and when the wheel 104 draws away from the rail sensor 401 a, the rail sensor 401 a detects horizontal force, which sign is negative. In this way by using the rail sensors can defeats or detects horizontal forces caused by the wheel to be monitored and also the adjacent wheels, which interfere the measuring process of the wheel to be monitored.

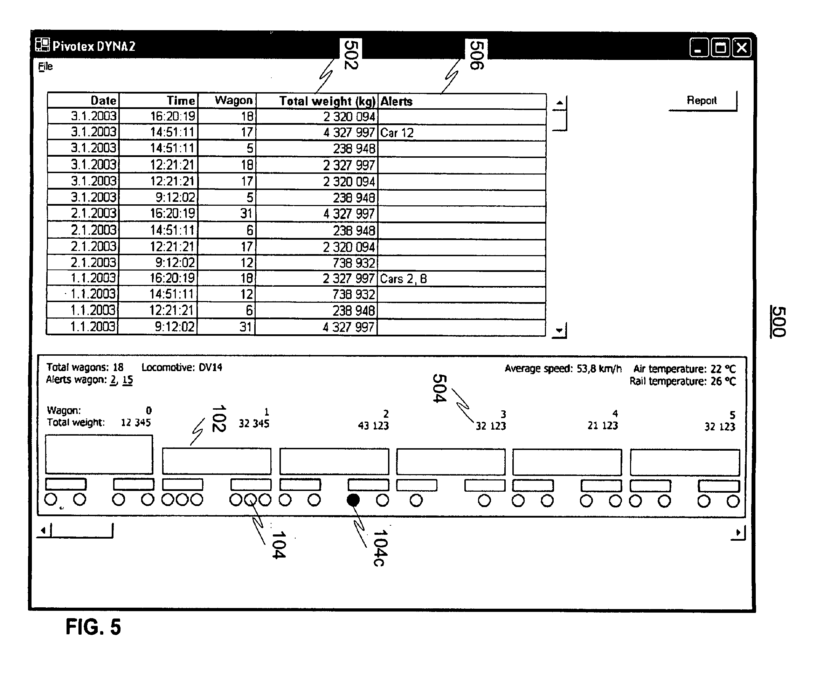

Figure 5 illustrates an exemplary user interface 500 according to an advantageous embodiment of the present invention, where the data processing unit is adapted to analyse data collected from sensors in such a way, that a type of a vehicle and/or wagon 102, numbers of wagons, bogies and wheels 104, as well as total weight 502 of the whole vehicle, weigh 504 of a wagon, bogie and/or wheel can be displayed to a user, such as an administrator, driver or other party. Moreover, possible broken wheels 104c, such as flat wheel and/or wheel out of roundness, as well as other defects in a structure of the wheel, springing or wagon are advantageously displayed to the user visually, like colouring an appropriate position of defects, such as broken wheel 104c in figure 5. Alerts can be communicated to the user also using other means, such as command line 506 or sound signal.

The data processing unit is also advantageously adapted to compare data collected from sensors to typical average data of unbroken wheel and to data measured when a wagon of a certain type travels on the rail, for example, and assessing whether a deviation goes beyond the accepted limits in order to detect anomalous in collected data and to alert.

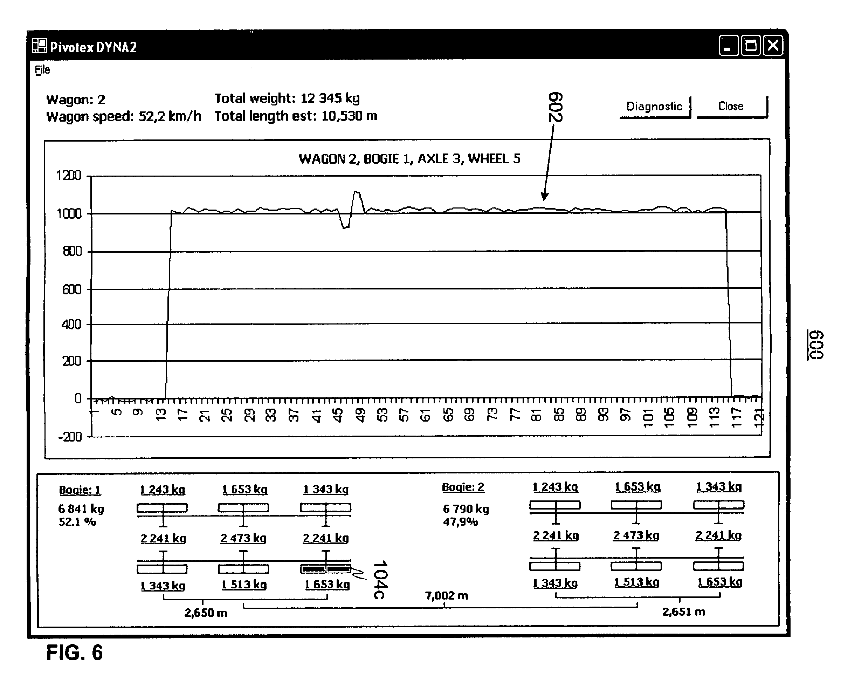

Figure 6 illustrates an exemplary user interface 600 and an exemplary graph 602 of continuous force effects of a single wheel travelling on a rail in the measurement zone according to an advantageous embodiment of the present invention.

According to an embodiment of the invention a user can select a desired wagon, such as wagon 2 with anomalous feature in figure 5, whereupon the user interface 600 can be displayed illustrating wheels and bogies 1 and 2 of the desired wagon, for example. Next the user can select a wheel 104c of the bogie in order to being displayed a processed continuous force effect curve 602 of the selected wheel. The anomalous feature caused by the defected wheel can be clearly seen from the curve 602. Alternatively the wagon and defected wheel of the wagon can be selected automatically, as well as the curve illustrating force effects of the defected wheel can be displayed automatically without any action of the user.

The invention has been explained above with reference to the aforementioned embodiments, and several advantages of the invention have been demonstrated. It is clear that the invention is not only restricted to these embodiments, but comprises all possible embodiments within the scope of the inventive thought and the following patent claims.

## Claims

1. An arrangement (100) for measuring characteristics of an object (102, 104) travelling on a rail (106) lying on sleepers (108), where the arrangement comprises sensors (110) adapted to measure force effects induced by the object to the rail, the sensors being coupled with a data processing unit (116) and forming a measurement zone, wherein the data processing unit (116) is adapted to read data from the sensors, **characterized in that** said processing unit (116) is further adapted to construct at least two virtual measurement sub-ranges (300a1, 300a2, 300b1, 300b2, 300c1) in such a way that the first virtual measurement sub-range corresponds to a first sub-zone of the measurement zone, said first sub-zone comprising a plurality of sensors elected from the sensors of the measurement zone, and the second virtual measurement sub-range corresponds to a second sub-zone of the measurement zone next the first one, said second sub-zone comprising a plurality of sensors elected from the sensors of the measurement zone, the sensors of the second sub-zone being elected at least partially different from the sensors of the first sub-zone such that said first and second virtual measurement sub-ranges overlap relative to the sensors of the first and second sub-zones, and the data processing unit (116) is further adapted to construct the first virtual measurement sub-range from data of sensors forming the first sub-zone of the measurement zone so that data is read in the first virtual measurement sub-range when the object travels along the rail in the first sub-zone of the measurement zone, and to construct the second virtual measurement sub-range from data of sensors forming the second sub-zone of the measurement zone so that data is read in the second virtual measurement sub-range when the object travels along the rail in the second sub-zone of the measurement zone, and the data processing unit (116) is furthermore adapted to construct a virtual measurement range (300T) to illustrate force effects of the object travelling on the rail at least in the part of the measurement zone by combining at least the first and second virtual measurement sub-ranges.

2. An arrangement according to claim 1, wherein at least some of the sensors (110a) are attachable into the rail between the sleepers (108), whereas at least some of the sensors (110b) are attachable at the point of the sleepers (108).

3. An arrangement according to claim 1-2, wherein the sensor (110) is a bonded electrical resistance strain gauge.

4. An arrangement according to claim 1-3, wherein the sensor (110b) attachable at the point of the sleeper (108) is a type of a double ended shear beam sensor, and is adapted to sense at least vertical forces, and the sensor (110a) attachable into the rail (106) between the sleepers (108) is a type of a press fit sensor, which is adapted to sense at least horizontal forces.

5. An arrangement according to claim 1, further comprising a rail fastening unit, and the sensor (110) attachable at the point of the sleepers (108) is integrated into the rail fastening unit.

6. An arrangement according to claim 1, wherein the measurement sub-zone corresponding the measurement sub-range for a wagon comprises a greater number of sensors than for a bogie, and for a bogie a greater number of sensors than for an axle or wheel.

7. An arrangement according to claim 6, wherein data for the measurement sub-range (300c1) for a wheel (104) is read, when in use, from five sensors (110), two of which (110a¹, 110a⁷) are attachable into the rail (106) and three of which (110b², 110b⁴, 110b⁶) are attachable at the point of sleepers (108), where the sleepers (108) are between said two sensors (110a¹, 110a⁷) attachable into the rail (106), and data for the measurement sub-range for a bogie is read from seven sensors (110), two of which (110a¹, 110a¹¹) are attachable into the rail (106) and five of which (110b², 110b⁴, 110b⁶, 110b⁸, 110b¹⁰) are attachable at the point of sleepers (108), where the sleepers are between said two sensors (110a¹, 110a¹¹) attachable into the rail (108).

8. An arrangement according to claim 1 or 6, wherein the length of the measurement sub-range is adapted to be varied programmatically based on the object to be measured.

9. An arrangement according to claim 1, wherein each sensor is coupled with the data processing unit (116) via own communication channel (112).

10. An arrangement according to claim 1, wherein each sensor (110) is read at the same time.

11. An arrangement according to claim 1, wherein the data processing unit (116) is adapted to analyse the collected data and compare it with known data characteristic for type of a vehicle and/or wagon in such a way, that at least one of the following character is determined: type of a vehicle and/or wagon, numbers of vehicles, wagons, bogies and/or wheels, and total weight of a vehicle, wagon, bogie and/or wheel.

12. An arrangement according to claim 1, wherein the data processing unit (116) is adapted to compare data collected from sensors to the typical average data of unbroken wheel and to the data measured beforehand when an unbroken wagon of a certain type has been travelled on the rail and further adapted to assess whether a deviation of measured data goes beyond the accepted limits in order to detect anomalous in collected data and to alert.

13. A method (100) for measuring characteristics of an object (102, 104), such as a wheel, axle, bogie, or wagon, travelling on a rail (106) lying on sleepers (108), where force effects induced by the object to the rail is read by plurality of sensors (110) forming a measurement zone, **characterized in that**, at least two virtual measurement sub-ranges (300a1, 300a2, 300b1, 300b2, 300c1) are constructed in such a way that the first virtual measurement sub-range corresponds to a first sub-zone of the measurement zone, said first sub-zone comprising a number of sensors elected from the sensors of the measurement zone, and the second virtual measurement sub-range corresponds to a second sub-zone of the measurement zone next the first one, said second sub-zone comprising a number of sensors elected from the sensors of the measurement zone, the sensors of the second sub-zone being elected at least partially different from the sensors of the first sub-zone such that said first and second virtual measurement sub-ranges overlap relative to the sensors of the first and second sub-zones, and further the first virtual measurement sub-range is constructed from data of sensors forming the first sub-zone of the measurement zone so that data is read in the first virtual measurement sub-range when the object travels along the rail in the first sub-zone of the measurement zone and the second virtual measurement sub-range is constructed from data of sensors forming the second sub-zone of the measurement zone so that data is read in the second virtual measurement sub-range when the object travels along the rail in the second sub-zone of the measurement zone, and furthermore a virtual measurement range (300T) is constructed to illustrate force effects of the object travelling on the rail at least in the part of the measurement zone by combining at least the first and second virtual measurement sub-ranges.

14. A computer program product (116e), **characterized in that** it is adapted, when run on a computer, to perform the method according to claim 13.

15. A data processing unit (116), **characterized in that** it comprises the computer program product according to claim 14.

## Patentansprüche

1. Anordnung (100) zum Messen von Merkmalen eines Objekts (102, 104), das sich auf einer Schiene (106) bewegt, die auf Schwellen (108) liegt, wobei die Anordnung Sensoren (110) zum Messen von durch das Objekt induzierten Krafteinwirkungen auf die Schiene umfasst, wobei die Sensoren mit einer Datenverarbeitungseinheit (116) gekoppelt sind und eine Messzone bilden, wobei die Datenverarbeitungseinheit (116) gestaltet ist, um Daten aus den Sensoren zu lesen, **dadurch gekennzeichnet, dass** die Verarbeitungseinheit (116) ferner gestaltet ist, um mindestens zwei virtuelle Messunterbereiche (300a1, 300a2, 300b1, 300b2, 300c1) zu konstruieren derart, dass der erste virtuelle Messunterbereich einer ersten Unterzone der Messzone entspricht, wobei die erste Unterzone eine Vielzahl von Sensoren umfasst, die aus den Sensoren der Messzone ausgewählt sind, und der zweite virtuelle Messunterbereich einer zweiten Unterzone der Messzone neben der ersten entspricht, wobei die zweite Unterzone eine Vielzahl von Sensoren aufweist, die aus den Sensoren der Messzone ausgewählt sind, die Sensoren der zweiten Unterzone zumindest teilweise verschieden von den Sensoren der ersten Unterzone ausgewählt sind, so dass sich die ersten und zweiten virtuellen Messunterbereiche relativ zu den Sensoren der ersten und zweiten Unterzonen überlappen, und die Datenverarbeitungseinheit (116) ferner gestaltet ist, um den ersten virtuellen Messunterbereich aus Daten von Sensoren zu konstruieren, die die erste Unterzone der Messzone bilden, so dass Daten in dem ersten virtuellen Messunterbereich gelesen werden, wenn sich das Objekt entlang der Schiene in der ersten Unterzone der Messzone bewegt, und den zweiten virtuellen Messunterbereich aus Daten von Sensoren zu konstruieren, die die zweite Unterzone der Messzone bilden, so dass Daten in dem zweiten virtuellen Messunterbereich gelesen werden, wenn sich das Objekt entlang der Schiene in der zweiten Unterzone der Messzone bewegt, und die Datenverarbeitungseinheit (116) ferner gestaltet ist, um einen virtuellen Messbereich (300T) zu konstruieren und Krafteinwirkungen des sich auf der Schiene bewegenden Objekts zumindest in dem Teil der Messzone durch Kombinieren von zumindest den ersten und zweiten virtuellen Messunterbereichen darzustellen.

2. Anordnung nach Anspruch 1, **dadurch gekennzeichnet, dass** mindestens einige der Sensoren (110a) in der Schiene zwischen den Schwellen (108) anbringbar sind, während mindestens einige der Sensoren (110b) am Ort der Schwellen (108) anbringbar sind.

3. Anordnung nach Anspruch 1-2, **dadurch gekennzeichnet, dass** der Sensor (110) ein gebondeter Widerstandsdehnungsmessstreifen (bonded electrical resistance strain gauge) ist.

4. Anordnung nach Anspruch 1-3, **dadurch gekennzeichnet, dass** der Sensor (110b), der am Ort der Schwelle (108) anbringbar ist, von der Art eines doppelendigen Scherbalkensensors und gestaltet ist, um zumindest vertikale Kräfte zu messen, und der Sensor (110a), der in der Schiene (106) zwischen den Schwellen (108) anbringbar ist, von der Art eines Einpresssensors ist, der gestaltet ist, um zumindest horizontale Kräfte zu messen.

5. Anordnung nach Anspruch 1, ferner umfassend eine Schienenbefestigungseinheit, wobei der Sensor (110), der am Ort der Schwellen (108) anbringbar ist, in der Schienenbefestigungseinheit integriert ist.

6. Anordnung nach Anspruch 1, **dadurch gekennzeichnet, dass** die Messunterzone, die dem Messunterbereich entspricht, für einen Wagon eine größere Anzahl von Sensoren als für ein Drehgestell und für ein Drehgestell eine größere Anzahl von Sensoren als für eine Achse oder ein Rad aufweist.

7. Anordnung nach Anspruch 6, **dadurch gekennzeichnet, dass** Daten für den Messunterbereich (300c1) für ein Rad (104) im Gebrauch aus fünf Sensoren (110), wobei zwei (110a¹, 110a⁷) davon in der Schiene (106) und drei (100b², 110b⁴, 100b⁶) davon am Ort von Schwellen (108) anbringbar sind, gelesen werden, wobei sich die Schwellen (108) zwischen den beiden Sensoren (110a¹, 110a⁷) befinden, die in der Schiene (106) anbringbar sind, und Daten für den Messunterbereich für ein Drehgestell aus sieben Sensoren (110), wobei zwei (110a¹, 110a¹¹) davon in der Schiene (106) anbringbar und fünf (110b², 110b⁴, 110b⁶, 110b⁸, 110b¹⁰) davon am Ort von Schwellen (108) anbringbar sind, wobei sich die Schwellen zwischen den beiden Sensoren (110a¹, 110a¹¹) befinden, die in der Schiene (108) anbringbar sind.

8. Anordnung nach Anspruch 1 oder 6, **dadurch gekennzeichnet, dass** die Länge des Messunterbereiches gestaltet ist, um auf der Basis des zu messenden Objekts programmatisch variiert zu werden.

9. Anordnung nach Anspruch 1, **dadurch gekennzeichnet, dass** jeder Sensor mit der Datenverarbeitungseinheit (116) über einen eigenen Kommunikationskanal (112) gekoppelt ist.

10. Anordnung nach Anspruch 1, **dadurch gekennzeichnet, dass** jeder Sensor (110) zur selben Zeit gelesen wird.

11. Anordnung nach Anspruch 1, **dadurch gekennzeichnet, dass** die Datenverarbeitungseinheit (116) gestaltet ist, um die gesammelten Daten zu analysieren und mit bekannten Datenmerkmalen für einen Fahrzeug- und/oder Wagontyp zu vergleichen derart, dass mindestens eines der folgenden Merkmale bestimmt wird: Typ eines Fahrzeugs und/oder Wagons, Anzahl von Fahrzeugen, Wagons, Drehgestellen und/oder Rädern und Gesamtgewicht eines Fahrzeugs, Wagons, Drehgestells und/oder Rads.

12. Anordnung nach Anspruch 1, **dadurch gekennzeichnet, dass** die Datenverarbeitungseinheit (116) gestaltet ist, um von Sensoren gesammelte Daten mit den typischen Durchschnittsdaten von einem unversehrtem Rad und den vorher gemessenen Daten, wenn sich ein unversehrter Wagon eines bestimmten Typs auf der Schiene bewegt hat, zu vergleichen, und ferner gestaltet ist, um abzuschätzen, ob eine Abweichung der gemessenen Daten über die zulässigen Grenzen hinausgeht, um Anomalien in den gesammelten Daten zu detektieren und einen Alarm auszugeben.

13. Verfahren (100) zum Messen von Merkmalen eines Objekts (102, 104), wie zum Beispiel eines Rades, einer Achse, eines Drehgestells oder eines Wagons, der/die/das sich auf einer Schiene (106) bewegt, die auf Schwellen (108) liegt, wobei durch das Objekt induzierte Krafteinwirkungen auf die Schiene von einer Vielzahl von Sensoren (110), die eine Messzone bilden, gelesen werden, **dadurch gekennzeichnet, dass** mindestens zwei virtuelle Messunterbereiche (300a1, 300a2, 300b1, 300b2, 300c1) derart konstruiert werden, dass der erste virtuelle Messunterbereich einer ersten Unterzone der Messzone entspricht, wobei die erste Unterzone eine Vielzahl von Sensoren aufweist, die aus den Sensoren der Messzone ausgewählt sind, und der zweite virtuelle Messunterbereich einer zweiten Unterzone der Messzone neben der ersten entspricht, wobei die zweite Unterzone eine Anzahl von Sensoren aufweist, die aus den Sensoren der Messzone ausgewählt sind, wobei die Sensoren der zweiten Unterzone zumindest teilweise verschieden von den Sensoren der ersten Unterzone ausgewählt sind, so dass sich die ersten und zweiten virtuellen Messunterbereiche relativ zu den Sensoren der ersten und zweiten Unterzonen überlappen, und ferner der erste virtuelle Messunterbereich aus Daten von Sensoren konstruiert ist, die die erste Unterzone der Messzone bilden, so dass Daten in dem ersten virtuellen Messunterbereich gelesen werden, wenn sich das Objekt entlang der Schiene in der ersten Unterzone der Messzone bewegt, und der zweite virtuelle Messunterbereich aus Daten von Sensoren konstruiert ist, die die zweite Unterzone der Messzone bilden, so dass Daten in dem zweiten virtuellen Messunterbereich gelesen werden, wenn sich das Objekt entlang der Schiene in der zweiten Unterzone der Messzone bewegt, und ferner ein virtueller Messbereich (300T) konstruiert wird, um Krafteinwirkungen des sich auf der Schiene bewegenden Objekts zumindest in dem Teil der Messzone durch Kombinieren von zumindest den ersten und zweiten virtuellen Messunterbereichen darzustellen.

14. Computerprogrammprodukt (116e), **dadurch gekennzeichnet, dass** es gestaltet ist, um bei Laufen auf einem Computer das Verfahren nach Anspruch 13 auszuführen.

15. Datenverarbeitungseinheit (116), **dadurch gekennzeichnet, dass** sie das Computerprogrammprodukt nach Anspruch 14 aufweist.

## Revendications

1. Dispositif (100) de mesure des caractéristiques d'un objet (102, 104) se déplaçant sur un rail (106) reposant sur des traverses (108), le dispositif comprenant des capteurs (110) conçus pour mesurer les effets de la force induits par l'objet sur le rail, les capteurs étant couplés avec une unité de traitement des données (116) et formant une zone de mesure, dans lequel l'unité de traitement des données (116) est conçue pour lire les données provenant des capteurs, **caractérisé en ce que** ladite unité de traitement (116) est conçue en outre pour élaborer au moins deux sous-plages de mesure virtuelles (300a1, 300a2, 300b1, 300b2, 300c1) de telle sorte que la première sous-plage de mesure virtuelle correspond à une première sous-zone de la zone de mesure, ladite première sous-zone comprenant une pluralité de capteurs choisis parmi les capteurs de la zone de mesure, et la deuxième sous-plage de mesure virtuelle correspond à une deuxième sous-zone de la zone de mesure adjacente à la première, ladite deuxième sous-zone comprenant une pluralité de capteurs choisis parmi les capteurs de la zone de mesure, les capteurs de la deuxième sous-zone étant choisis au moins en partie différents des capteurs de la première sous-zone de telle sorte que lesdites première et deuxième sous-plages de mesure virtuelles se chevauchent par rapport aux capteurs des première et deuxième sous-zones, et l'unité de traitement des données (116) est conçue en outre pour élaborer la première sous-plage de mesure virtuelle à partir des données de capteurs formant la première sous-zone de la zone de mesure de sorte que les données sont lues dans la première sous-plage de mesure virtuelle, lorsque l'objet se déplace le long du rail dans la première sous-zone de la zone de mesure, et pour élaborer la deuxième sous-plage de mesure virtuelle à partir des données de capteurs formant la deuxième sous-zone de la zone de mesure de telle sorte que les données sont lues dans la deuxième sous-plage de mesure virtuelle lorsque l'objet se déplace le long du rail dans la deuxième sous-zone de la zone de mesure, et l'unité de traitement des données (116) est conçue en outre pour élaborer une plage de mesure virtuelle (300T) pour illustrer les effets de la force de l'objet se déplaçant sur le rail au moins dans la partie de la zone de mesure en combinant au moins les première et deuxième sous-plages de mesure virtuelles.

2. Dispositif selon la revendication 1, dans lequel au moins certains capteurs (100a) peuvent être fixés dans le rail entre les traverses (108), tandis qu'au moins certains capteurs (110b) peuvent être fixés à l'endroit des traverses (108).

3. Dispositif selon les revendications 1 à 2, dans lequel le capteur (110) est une jauge de contrainte à résistance électrique collée.

4. Dispositif selon les revendications 1 à 3, dans lequel le capteur (110b) pouvant être fixé à l'endroit de la traverse (108) est un genre de capteur de force en double cisaillement, et est conçu pour détecter au moins les forces verticales et le capteur (110a) pouvant être fixé dans le rail (106) entre les traverses (108) est un genre de capteur ajusté par serrage qui est conçu pour détecter au moins les forces horizontales.

5. Dispositif selon la revendication 1, comprenant en outre une unité de fixation au rail et le capteur (110) pouvant être fixé à l'endroit des traverses (108) est intégré dans l'unité de fixation au rail.

6. Dispositif selon la revendication 1, dans lequel la sous-zone de mesure correspondant à la sous-plage de mesure pour un wagon comprend un nombre plus important de capteurs que pour un bogie, et pour un bogie un nombre plus important de capteurs que pour un essieu ou une roue.

7. Dispositif selon la revendication 6, dans lequel des données pour la sous-plage de mesure (300c1) pour une roue (104) sont lues, lors de l'utilisation, par cinq capteurs (110), dont deux (110a¹, 110a⁷) peuvent être fixés dans le rail (106) et dont trois (110b², 110b⁴, 110b⁶) peuvent être fixés à l'endroit des traverses (108), les traverses (108) se trouvant entre lesdits deux capteurs (110a¹, 110a⁷) pouvant être fixés dans le rail (106), et des données pour la sous-plage de mesure pour un bogie sont lues par sept capteurs (110), dont deux (110a¹, 110a¹¹) peuvent être fixés dans le rail (106) et dont cinq (110b², 110b⁴, 110b⁶, 110b⁸, 110b¹⁰) peuvent être fixés à l'endroit des traverses (108), les traverses se situant entre lesdits deux capteurs (110a¹, 110a¹¹) pouvant être fixés dans le rail (108).

8. Dispositif selon la revendication 1 ou 6, dans lequel la longueur de la sous-plage de mesure est conçue pour être modifiée de manière programmatique sur la base de l'objet à mesurer.

9. Dispositif selon la revendication 1, dans lequel chaque capteur est couplé avec l'unité de traitement des données (116) via son propre canal de communication (112).

10. Dispositif selon la revendication 1, dans lequel chaque capteur (110) est lu en même temps.

11. Dispositif selon la revendication 1, dans lequel l'unité de traitement des données (116) est conçue pour analyser les données recueillies et les comparer avec des données connues caractéristiques du type de véhicule et/ou wagon de telle sorte qu'au moins un des caractères suivants est déterminé : type de véhicule et/ou wagon, nombre de véhicules, wagons, bogies et/ou roues et poids total d'un véhicule, wagon, bogie et/ou roue.

12. Dispositif selon la revendication 1, dans lequel l'unité de traitement des données (116) est conçue pour comparer les données recueillies par les capteurs par rapport aux données moyennes typiques d'une roue intacte et par rapport aux données mesurées auparavant lorsqu'un wagon intact d'un certain type s'est déplacé sur le rail et est conçue en outre pour évaluer si un écart des données mesurées va au-delà des limites acceptées afin de détecter des anomalies dans les données recueillies et donner l'alerte.

13. Méthode (100) de mesure des caractéristiques d'un objet (102, 104), tel qu'une roue, un essieu, un bogie ou un wagon, se déplaçant sur un rail (106) reposant sur des traverses (108), les effets de la force induits par l'objet sur le rail étant lus par une pluralité de capteurs (110) formant une zone de mesure, **caractérisé en ce qu'**au moins deux sous-plages de mesure virtuelles (300a1, 300a2, 300b1, 300b2, 300c1) sont élaborées de telle sorte que la première sous-plage de mesure virtuelle correspond à une première sous-zone de la zone de mesure, ladite première sous-zone comprenant un certain nombre de capteurs choisis parmi les capteurs de la zone de mesure, et la deuxième sous-plage de mesure virtuelle correspond à une deuxième sous-zone de la zone de mesure adjacente à la première, ladite deuxième sous-zone comprenant un certain nombre de capteurs choisis parmi les capteurs de la zone de mesure, les capteurs de la deuxième sous-zone étant choisis au moins en partie différents des capteurs de la première sous-zone de telle sorte que lesdites première et deuxième sous-plages de mesure virtuelles se chevauchent par rapport aux capteurs des première et deuxième sous-zones, et la première sous-plage de mesure virtuelle est élaborée en outre à partir des données des capteurs formant la première sous-zone de la zone de mesure de sorte que les données sont lues dans la première sous-plage de mesure virtuelle, lorsque l'objet se déplace le long du rail dans la première sous-zone de la zone de mesure et la deuxième sous-plage de mesure virtuelle est élaborée à partir des données des capteurs formant la deuxième sous-zone de la zone de mesure de telle sorte que les données sont lues dans la deuxième sous-plage de mesure virtuelle lorsque l'objet se déplace le long du rail dans la deuxième sous-zone de la zone de mesure, et de plus une plage de mesure virtuelle (300T) est élaborée pour illustrer les effets de la force de l'objet se déplaçant sur le rail au moins dans la partie de la zone de mesure en combinant au moins les première et deuxième sous-plages de mesure virtuelles.

14. Programme informatique (116e), **caractérisé en ce qu'**il est conçu, lorsqu'il est exécuté sur un ordinateur, pour réaliser la méthode selon la revendication 13.

15. Unité de traitement des données (116), **caractérisée en ce qu'**elle comprend le programme informatique selon la revendication 14.
